# EUROPÄISCHE PATENTANMELDUNG

(11) **EP 4 187 498 A1**
(43) Veröffentlichungstag der Anmeldung: **31.05.2023**
(21) Anmeldenummer: 21210519.1
(22) Anmeldetag: 25.11.2021
(51) Int. Cl.: G06V 10/70, G06V 10/764

(54) **VERFAHREN UND VORRICHTUNG ZUR AUTOMATISIERTEN ERKENNUNG VON VERKEHRSTEILNEHMERTYPEN IM STRASSENVERKEHR**

(71) Anmelder: Roadia GmbH, 13465 Berlin (DE)
(72) Erfinder: Fischer, Tobias, 13465 Berlin (DE); Filipenko, Mykhaylo, 13465 Berlin (DE); Hantschmann, Markus, 13465 Berlin (DE); Hall, Benjamin, 13465 Berlin (DE)
(74) Vertreter: dompatent von Kreisler Selting Werner - Partnerschaft von Patent- und Rechtsanwälten mbB

(57) **Zusammenfassung**

Die Erfindung betrifft ein Verfahren (100) zur automatisierten Klassifizierung von Verkehrsteilnehmertypen im Straßenverkehr, wobei das Verfahren die folgenden Schritte aufweist:
- Generierung von auszuwertenden Test-Bilddaten unter Verwendung einer Kameravorrichtung, wobei die Test-Bilddaten eine fotografische Abbildung einer Verkehrssituation speichern (110);
- Generierung von Test-Metadaten, wobei die Test-Metadaten den auszuwertenden Test-Bilddaten zugeordnet sind (120);
- Klassifizierung der Test-Bilddaten hinsichtlich des Verkehrsteilnehmertyps unter Verwendung eines mit Trainingsdaten trainierten Klassifikators, wobei die Trainingsdaten Trainings-Bilddaten sowie den Trainings-Bilddaten zugeordnete Trainings-Metadaten aufweisen und der Klassifikator als ein in Abhängigkeit von den Test-Metadaten trainierter Klassifikator ausgebildet ist (130).

## Beschreibung

Die vorliegende Erfindung betrifft ein Verfahren zur automatisierten Erkennung von Verkehrsteilnehmertypen im Straßenverkehr sowie eine entsprechende Vorrichtung für die automatisierte Erkennung von Verkehrsteilnehmertypen.

Die Erfassung von Verkehrsdaten im Straßenverkehr sowie die Auswertung dieser Daten ist für die Planung von Städten, Stadtteilen und Straßen von besonderer Bedeutung. Dabei ist es erforderlich, in zuverlässiger Weise zu ermitteln, welche Verkehrsteilnehmertypen (beispielsweise PKW, LKW, Motorrad, Fahrrad oder Fußgänger) wie häufig in einem bestimmten Straßenzug passieren.

Verschiedene Verfahren werden bislang eingesetzt, um die Verkehrsteilnehmertypen- und zahlen in einem bestimmten Straßenabschnitt zu bestimmen. Dabei können sowohl manuelle als auch automatisierte Verfahren zum Einsatz kommen.

Beispielweise kann die Erkennung der einzelnen Verkehrsteilnehmer und ihre Klassifizierung in manueller Weise erfolgen, indem eine oder mehrere Personen einen vorgegebenen Straßenabschnitt überwachen und dabei die Anzahl der jeweiligen Verkehrsteilnehmer dokumentieren. Die aufgenommen Daten werden anschließend an eine zentrale Stelle übermittelt, welche diese Daten auswertet. Eine manuelle Überwachung einzelner Straßenabschnitte ist nicht nur fehleranfällig, sondern auch sehr zeitaufwendig, personalaufwendig und zudem mit hohen Kosten verbunden.

Darüber hinaus können verschiedene technische Lösungen zum Einsatz kommen, um eine automatisierte Erkennung der Verkehrsteilnehmertypen zu ermöglichen. Dabei können Seitenradarsensoren, Infrarotsensoren oder Lidarsensoren zum Einsatz kommen, um die Anzahl der Achsen sowie den Achsabstand der jeweiligen Fahrzeuge zu ermitteln. Aus der Anzahl der Achsen sowie dem Achsabstand kann anschließend auf das entsprechende Fahrzeug geschlossen werden. Das vorstehend beschriebene Verfahren ist jedoch mit gewissen Ungenauigkeiten verbunden. Zudem können mit diesem Verfahren keine Fußgänger erkannt werden. Ferner stößt das beschriebene Verfahren an seine Grenzen, sofern Verkehrsteilnehmertypen auf mehreren Fahrspuren (zum Beispiel auf einer Landstraße oder einer Autobahn) erkannt werden sollen.

Weiterhin gibt es die Möglichkeit, bildgebende Verfahren einzusetzen, um die Verkehrsteilnehmertypen zu erkennen. Dabei können hochauflösende Kamerasysteme zum Einsatz kommen, die eine fotografische Aufnahme eines bestimmten Straßenabschnitts erzeugen. Die dabei generierten Bilddaten können unter Verwendung verschiedener Algorithmen ausgewertet werden. Dabei können beispielsweise Objekterkennungsalgorithmen verwendet werden, um auf das jeweils in einer Abbildung gezeigte Objekt zu schließen.

In den letzten Jahren wurden vermehrt Klassifikatoren eingesetzt, die unter Verwendung von Trainingsdaten derart trainiert wurden, dass sie eine autonome Erkennung von Objekten ermöglichen. Derartige Verfahren werden auch zu den Verfahren des maschinellen Lernens (im englischen auch als Machine Learning bezeichnet) gezählt. Die beschriebenen Klassifikatoren liefern recht gute Erkennungsraten, sofern eine große Menge an Trainingsdaten verfügbar ist. Insbesondere wenn nicht ausreichend Trainingsdaten verfügbar sind, werden lediglich relativ niedrige Erkennungsraten und entsprechend unzuverlässige Ergebnisse erreicht. Darüber hinaus liefern die bekannten Verfahren in denjenigen Fällen unzuverlässige Ergebnisse, in denen neue Aufhängungspunkte für die bildgebenden Sensoren verwendet werden oder in denen neue Verkehrssituationen analysiert werden, die nicht ausreichend durch die ursprünglichen Trainingsdaten abgedeckt sind.

In Anbetracht der vorstehend beschriebenen Herausforderungen ist es Ziel der vorliegenden Erfindung, ein Verfahren für die automatisierte Klassifizierung von Verkehrsteilnehmertypen im Straßenverkehr mit einer besonders hohen Erkennungsrate bereitzustellen.

Zur Lösung des vorstehend beschriebenen Problems wird mit der vorliegenden Erfindung ein Verfahren zur automatisierten Klassifizierung von Verkehrsteilnehmertypen im Straßenverkehr vorgeschlagen, wobei das Verfahren die folgenden Schritte aufweist:
- Generierung von auszuwertenden Test-Bilddaten unter Verwendung einer Kameravorrichtung, wobei die Test-Bilddaten eine fotografische Abbildung einer Verkehrssituation speichern;
- Generierung von Test-Metadaten, wobei die Test-Metadaten den auszuwertenden Test-Bilddaten zugeordnet sind;
- Klassifizierung der Test-Bilddaten hinsichtlich des Verkehrsteilnehmertyps unter Verwendung eines mit Trainingsdaten trainierten Klassifikators, wobei die Trainingsdaten Trainings-Bilddaten sowie den Trainings-Bilddaten zugeordnete Trainings-Metadaten aufweisen und der Klassifikator als ein in Abhängigkeit von den Test-Metadaten trainierter Klassifikator ausgebildet ist.

Das erfindungsgemäße Verfahren erlaubt eine hohe Erkennungsgenauigkeit durch das spezifische Trainieren des Klassifikators unter Verwendung spezifisch ausgewählter Trainingsdaten. Dadurch wird erreicht, dass in konkreten Anwendungsszenarien ein besonders geeigneter Klassifikator bereitgestellt wird, bei dem die Trainingsdaten selektiv ausgewählt sind. Dabei können beispielsweise mehrere Klassifikatoren im Vorfeld bereitgestellt sein (beispielsweise in einem lokalen Speichermedium oder in einem Cloudspeicher), sodass gemäß der aktuellen Test-Metadaten der passende Klassifikator ausgewählt werden kann. Alternativ kann es vorgesehen sein, dass Trainingsdaten mit unterschiedlichen Metadaten bereitgestellt sind und dass der Klassifikator in Abhängigkeit von den aktuellen Test-Metadaten mit den entsprechenden Trainingsdaten trainiert wird, die den Test-Metadaten entsprechende Trainings-Metadaten aufweisen. Je nach Implementierungsvariante kann das erfindungsgemäß Verfahren einen der nachfolgenden Schritte aufweisen:
- Trainieren eines Klassifikators mit selektiven Trainingsdaten, wobei die Trainingsdaten in Abhängigkeit von den Test-Metadaten ausgewählt sind; oder
- Auswahl eines mit Trainingsdaten trainierten Klassifikators, wobei die Auswahl der Klassifikators in Abhängigkeit von den Test-Metadaten erfolgt.

Bei dem erfindungsgemäßen Verfahren kann insbesondere eine Kameravorrichtung mit einem hochauflösenden Bildsensor sowie eine Aufnahmeoptik zum Einsatz kommen. Die hochauflösenden Bilddaten erlauben die Bereitstellung detailreicher Information, die für eine zuverlässige Klassifizierung unter Verwendung des Klassifikators dienlich sind.

Im Rahmen der vorliegenden Erfindung werden mit dem Begriff Trainingsdaten diejenigen Daten bezeichnet, die für das Trainieren des Klassifikators zur Verfügung stehen. Hingegen werden mit dem Begriff Testdaten diejenigen Daten bezeichnet, die mit Hilfe des trainierten Klassifikator auszuwerten sind. Dabei dienen die Test-Bilddaten als Eingang für den Klassifikator, während dieser nach Auswertung der Test-Bilddaten Klassifizierungsdaten ausgibt. Die Klassifizierungsdaten geben an, welcher Verkehrsteilnehmertyp (z.B. PKW, LKW oder Fahrrad) in den Test-Bilddaten erkannt wurde. Die Test-Metadaten beinhalten zusätzliche Informationen, die im Rahmen der vorliegenden Erfindung dazu verwendet werden, einen an die aktuellen Bedingungen (Ort, Perspektive der Aufnahme, Situation) angepassten Klassifikator bereitzustellen.

Der Begriff Metadaten im Sinne der vorliegenden Erfindung bezieht sich auf Daten, die über die Bilddaten hinausgehen. Wie im Nachfolgenden noch im Detail erläutert wird, können die Metadaten insbesondere Ortungsdaten aufweisen. In diesem Fall kann die Generierung der Test-Metadaten die Auswertung der von einem Ortungssensor empfangenen Messdaten umfassen. Beispielsweise kann der Ortungssensor GPS-Daten ausgeben, aus denen das aktuelle Land oder der aktuelle Kontinent ermittelt werden kann. Wird beispielsweise ermittelt, dass das erfindungsgemäße Verfahren aktuell in den USA zum Einsatz kommt, so kann ein Klassifikator verwendet werden, der zuvor mit Trainingsdaten trainiert wurde, die ebenfalls in den USA aufgenommen wurden. Dies bietet den Vorteil, dass unterschiedliche Zusammensetzungen der Verkehrsteilnehmer in unterschiedlichen Regionen berücksichtigt werden können. Beispielsweise sind in den USA statistisch betrachtet häufiger SUVs oder Trucks anzutreffen als in der EU. Hingegen sind in einigen asiatischen Ländern Motorräder häufiger anzutreffen als in einigen Ländern der EU. Dadurch können die Trainingsdaten, auf denen der Klassifikator beruht, entsprechend der aktuellen Region ausgewählt werden, wodurch geeignetere Trainingsdaten bereitgestellt werden und die Genauigkeit der Erkennung signifikant erhöht werden kann.

Der Klassifikator kann beispielsweise als ein künstliches neuronales Netz (im Englischen auch als Artificial Neural Network oder ANN bezeichnet) oder als SVM (Support Vector Machine) implementiert sein. Der Klassifikator ist zuvor mit Trainingsdaten trainiert, die einerseits Trainings-Bilddaten enthalten und andererseits Trainings-Metadaten, die den Trainings-Bilddaten zugeordnet sind. Beispielsweise können die Trainingsdaten erste Bilddaten aufweisen sowie den ersten Bilddaten zugeordnete erste Metadaten, in denen gespeichert ist, dass die ersten Bilddaten in den USA aufgenommen wurden. Genauso können für weitere Bilddaten Information darüber gespeichert sein, in welchem Staat oder in welcher Region die jeweilige Bilddaten aufgenommen wurden. Durch die Bereitstellung der Trainings-Metadaten wird es ermöglicht, beim Einsatz des erfindungsgemäßen Verfahrens die Test-Metadaten auszuwerten und entsprechend den Test-Metadaten die Trainingsdaten selektiv auszuwählen. Ist in den Test-Metadaten beispielsweise gespeichert, dass das erfindungsgemäße Verfahren derzeit in den USA verwendet wird bzw. dass die auszuwertenden Bilddaten in den USA aufgenommen wurden, so können selektiv diejenigen Trainingsdaten verwendet werden, deren Trainings-Metadaten darauf hinweisen, dass diese Trainingsdaten ebenfalls aus den USA stammen. Dadurch können dem Anwendungsszenario entsprechend spezifisch ausgewählte Trainingsdaten zum Einsatz kommen, wodurch das vorliegende Anwendungsszenario berücksichtigt und dadurch die Erkennungsgenauigkeit erhöht werden kann. Somit wird einerseits die Erkennungsgenauigkeit bei der gleichen Anzahl an Trainingsdaten erhöht und andererseits die erforderliche Menge an Trainingsdaten für das Erreichen einer vorgegebenen Erkennungsgenauigkeit reduziert.

Gemäß einer Ausführungsform des erfindungsgemäßen Verfahrens kann vorgesehen sein, dass die Test-Metadaten und die Trainings-Metadaten Ortungsdaten, Perspektivdaten und/oder Situationsdaten aufweisen. Wie bereits vorstehend ausgeführt, können die Ortungsdaten durch einen Ortungssensor, insbesondere durch einen GPS-Sensor generiert werden. Alternativ können auch andere Ortungssensoren zum Einsatz kommen, die beispielsweise auf einer Mobilfunktechnik basieren. Beispielweise können die Ortungsdaten auf Grundlage einer GSM-Ortung bereitgestellt werden.

Die Perspektivdaten enthalten Informationen darüber, in welcher Perspektive ein Bild aufgenommen wurde. Beispielsweise können die Perspektivdaten Information darüber enthalten, dass ein Bild in der Vogelperspektive, in der Seitenperspektive oder aus der Perspektive einer Autobahnbrücke aufgenommen wurde. Wird die Kameravorrichtung derart positioniert, dass sie die auszuwertenden Bilddaten (=Test-Bilddaten) in einer Vogelperspektive aufnimmt, so können in einem der finalen Klassifizierung vorgelagerten Klassifizierungsschritt die Perspektivdaten ermittelt werden. Dies kann beispielsweise durch eine separate Perspektivdaten-Klassifizierung erfolgen. Dabei kann ein Perspektivdaten-Klassifikator eingesetzt werden, der mit Trainingsdaten trainiert ist, die Bilddaten und den Bilddaten zugeordnete Perspektivdaten-Indikatoren enthalten. Auf diese Weise wird es ermöglicht, in einem ersten Klassifizierungsschritt die Perspektivdaten (=Test-Metadaten) zu ermitteln und anschließend in einem zweiten Klassifizierungsschritt die Test-Bilddaten hinsichtlich des Verkehrsteilnehmertyps unter Verwendung eines mit spezifischen Trainingsdaten trainierten Klassifikators zu klassifizieren, wobei ausschließlich Trainingsdaten verwendet werden, die in derselben Perspektive aufgenommen wurden wie die Test-Bilddaten. Die Trainings-Metadaten können beispielsweise manuell generiert worden sein. Bei der manuellen Generierung der Trainings-Metadaten kann eine mit der Klassifizierung der Trainings-Bilddaten beauftragte Person (oder mehrere Personen) eine manuelle Klassifizierung der Trainings-Bilddaten vornehmen und entsprechende Perspektivdaten-Indikatoren vergeben. Wie bereits vorstehend im Zusammenhang mit den Ortungsdaten erläutert, kann durch die spezifische Selektion der Trainingsdaten ebenfalls eine Erhöhung der Erkennungsgenauigkeit erzielt werden.

Die Situationsdaten weisen Information darüber auf, welche Situation bzw. welche Szene in einer Bilddatei abgebildet ist. Beispielsweise können die Situationsdaten Information darüber aufweisen, dass die Bilddaten auf einer Autobahn, an einer innerstädtischen Kreuzung oder an einer Autobahn-Auffahrt aufgenommen wurden. Sowohl die Trainingsdaten als auch die Testdaten können entsprechende Situationsdaten als Metadaten aufweisen. Die Generierung dieser Metadaten kann insbesondere unter Verwendung eines Situationsdaten-Klassifikator erfolgen. Ähnlich wie bei den Perspektivdaten kann es auch bei den Situationsdaten vorgesehen sein, dass in einem vorgelagerten Schritt im Rahmen eines ersten Klassifizierungsschrittes die Situationsdaten ermittelt werden, indem ein separater Klassifikator eingesetzt wird, der mit Trainingsdaten trainiert ist, die Trainings-Bilddaten sowie den Trainings-Bilddaten zugeordnete Trainings-Situationsdaten enthalten. Anschließend kann dann in einem zweiten Klassifizierungsschritt ein Klassifikator verwendet werden, der ausschließlich mit Trainingsdaten trainiert ist, welche in derselben Situation aufgenommen wurden wie die Testdaten und daher mit den Test-Metadaten identische Trainings-Metadaten aufweisen. Wie bereits zuvor beschrieben, können mehrere Klassifikatoren für die verschiedenen Situationen im Vorfeld in einem Speichermedium bereitgestellt sein. Alternativ kann es vorgesehen sein, dass in Abhängigkeit der aktuellen Test-Situationsdaten der Klassifikator ausschließlich mit Trainingsdaten trainiert wird, die den Test-Situationsdaten entsprechen. Ist also in den aktuellen Test-Situationsdaten gespeichert, dass die aktuellen Test-Bilddaten an einer Straßenkreuzung aufgenommen wurden, so kann ein Klassifikator verwendet werden, der ausschließlich mit Trainingsdaten trainiert ist, die an Straßenkreuzungen aufgenommen wurden. Auf diese Weise kann der Klassifikator hinsichtlich im Hinblick auf die Auswahl der Trainingsdaten optimiert werden, wodurch die Erkennungsgenauigkeit der Klassifizierung erhöht wird bzw. die Menge der benötigten Trainingsdaten für das Erzielen einer vorgegebenen Genauigkeit reduziert wird.

Alternativ kann auch vorgesehen sein, dass die Test-Metadaten und die Trainings-Metadaten Fahrzeugtypdaten aufweisen. Gemäß diesem Ausführungsbeispiel kann die Klassifizierung ebenfalls in zwei Schritten erfolgen. In einem ersten Schritt wird unter Verwendung eines Klassifikators, der mit Trainings-Bilddaten und Trainings-Fahrzeugtypdaten trainiert wurde der in einer auszuwertenden Bilddatei abgebildete Fahrzeugtyp ermittelt. Dadurch kann in dem ersten Schritt eine grobe Klassifizierung durchgeführt werden, wobei beispielsweise ermittelt wird, dass es sich bei dem Verkehrsteilnehmer um einen PKW handelt. Anschließend kann in einem zweiten Schritt ermittelt werden, um welchen PKW-Typ es sich bei dem Verkehrsteilnehmer konkret handelt. In dem zweiten Klassifizierungsschritt werden dann nur die Trainingsdaten verwendet, die (verschiedene) PKW-Typen umfassen. Beispielsweise kann in dem zweiten Klassifizierungsschritt ermittelt werden, dass es sich um einen Kleinwagen, eine Limousine oder einen SUV handelt. Auf diese Weise wird die Erkennungsgenauigkeit der Klassifizierung erhöht, indem ausschließlich Trainingsdaten verwendet werden, die dem aktuellen Verkehrsteilnehmertyp entsprechen. Dabei unterscheidet sich der im ersten Schritt verwendete Klassifikator von dem im zweiten Schritt verwendete Klassifikator dahingehend, dass der im zweiten Schritt verwendete Klassifikator mit selektierten Trainingsdaten trainiert wurde. Wie bereits vorstehend erläutert, kann der selektiv trainierte Klassifikator entweder im Vorfeld in einem Speichermedium hinterlegt sein oder in Abhängigkeit der aktuellen Test-Fahrzeugtypdaten (= Test-Metadaten) unter Verwendung selektiver Trainingsdaten trainiert werden.

Gemäß einer Ausführungsform des erfindungsgemäßen Verfahrens kann vorgesehen sein, dass die Test-Metadaten und die Trainings-Metadaten Ortungsdaten aufweisen und dass der Klassifikator ausschließlich mit Trainingsdaten trainiert ist, die Trainings-Metadaten aufweisen, welche identisch mit den Test-Metadaten sind oder den Test-Metadaten zugeordnet sind. Beispielsweise kann in einem Anwendungsszenario in den Test-Metadaten gespeichert sein, dass die aktuellen Test-Bilddaten in den USA aufgenommen wurden. Die Test-Metadaten können insbesondere durch einen Ortungssensor bereitgestellt sein. In Reaktion der bereitgestellten Test-Ortungsdaten kann ein Klassifikator verwendet werden, der ausschließlich mit Trainingsdaten trainiert wurde, deren Metadaten angeben, dass diese ebenfalls in den USA aufgenommen wurden. Entsprechend sind die Test-Metadaten und die Trainings-Metadaten in diesem Fall identisch. Auch kann vorgesehen sein, dass die für das Trainieren verwendeten Trainingsdaten einen Ortungsdaten-Indikator aufweisen, die einen Wert "USA" oder "Kalifornien" enthalten. Alternativ kann es vorgesehen sein, dass die Test-Metadaten und die Trainings-Metadaten in unterschiedlichen Formaten wiedergegeben sind. Dies kann beispielsweise dadurch hervorgerufen sein, dass bei der Generierung der Test-Metadaten ein anderer Ortungssensor verwendet wurde als bei der Generierung der Trainings-Metadaten. So können beispielsweise die Test-Metadaten GPS-Ortungsdaten aufweisen, während die Trainings-Metadaten GSM-Ortungsdaten aufweisen. In diesem Fall sind die Ortungsdaten nicht identisch, können jedoch einander zugeordnet werden, wenn sie beispielsweise beide einen Ort in den USA codieren. Auch kann vorgesehen sein, dass die Test-Metadaten einen Indikator "USA" aufweisen, während die Trainings-Metadaten einen Indikator "New York" enthält. Auch in diesem Fall können die Metadaten einander zugeordnet sein. Alternativ kann es vorgesehen sein, dass der Klassifikator nicht ausschließlich, sondern überwiegend mit Trainingsdaten trainiert ist, die Trainings-Metadaten aufweisen, welche identisch mit den Test-Metadaten sind oder den Test-Metadaten zugeordnet sind. Beispielsweise kann vorgesehen sein, dass mehr als 50 %, mehr als 70 % oder mehr als 90 % der Trainingsdaten, mit denen der Klassifikator trainiert ist, Trainings-Metadaten aufweisen, die identisch mit den Test-Metadaten sind oder den Test-Metadaten zugeordnet sind.

Auch kann gemäß einer Ausführungsform des erfindungsgemäßen Verfahrens vorgesehen sein, dass die Test-Metadaten und die Trainings-Metadaten Perspektivdaten aufweisen und dass der Klassifikator ausschließlich mit Trainingsdaten trainiert ist, die Trainings-Metadaten aufweisen, welche identisch mit den Test-Metadaten sind oder den Test-Metadaten zugeordnet sind. Alternativ kann vorgesehen sein, dass nicht ausschließlich, sondern überwiegend Trainingsdaten zum Einsatz kommen, die Trainings-Metadaten aufweisen, welche identisch mit den Test-Metadaten sind oder den Test-Metadaten zugeordnet sind. Beispielsweise kann vorgesehen sein, dass der Anteil der genannten Trainingsdaten an den gesamten zur Verfügung stehenden Trainingsdaten mehr als 50 %, mehr als 70 % oder mehr als 90 % beträgt.

Ferner kann vorgesehen sein, dass die Test-Metadaten und die Trainings-Metadaten Situationsdaten aufweisen und dass der Klassifikator ausschließlich mit Trainingsdaten trainiert ist, die Trainings-Metadaten aufweisen, welche identisch mit den Test-Metadaten sind oder den Test-Metadaten zugeordnet sind. Die Situationsdaten beschreiben eine spezifische Verkehrssituation bzw. ein spezifisches Verkehrsszenario. Beispielsweise können die Situationsdaten einen Indikator aufweisen, der Informationen darüber speichert, in welcher Verkehrssituation bzw. welchem Verkehrsszenario ein Bild aufgenommen wurde. Beispielsweise kann in den Situationsdaten gespeichert sein, dass eine Bilddatei an einer Straßenkreuzung, in einer Fußgängerzone, oder auf einer Autobahn aufgenommen wurden. Wie an den vorstehenden Beispielen zu erkennen ist, kann sich die Zusammensetzung der Verkehrsteilnehmer in den verschiedenen Situationen bzw. Szenarien signifikant unterscheiden. Durch die Bereitstellung der Metadaten, die Situationsdaten aufweisen sowie durch das spezifische Trainieren des Klassifikators mit spezifisch ausgewählten Trainingsdaten wird eine Erhöhung der Erkennungsgenauigkeit bei der Klassifizierung erzielt.

Gemäß einer weiteren Ausführungsform des erfindungsgemäßen Verfahrens kann vorgesehen sein, dass mehrere der vorstehend genannten Metadaten (Ortungsdaten, Perspektivdaten, Situationsdaten) gleichzeitig verwendet werden. Beispielsweise können die Test-Metadaten sowohl Ortungsdaten als auch Perspektivdaten als auch Situationsdaten aufweisen. So kann etwa bekannt sein, dass eine Bilddatei in Deutschland (Ortungsinformation) auf einer Autobahn (Situationsinformation) in der Vogelperspektive (Perspektivinformation) aufgenommen wurde. Diese Informationen aus den Test-Metadaten können verwendet werden, um ausschließlich oder zumindest überwiegend Trainingsdaten selektiv auszuwählen, die ebenfalls auf deutschen Autobahnen in der Vogelperspektive aufgenommen wurden.

Weiterhin kann gemäß einer bevorzugten Ausführungsform des erfindungsgemäßen Verfahrens vorgesehen sein, dass bei der Klassifizierung der Test-Bilddaten die Erkennungsgenauigkeit der Klassifizierung ermittelt wird und dass die Test-Bilddaten einer manuellen Klassifizierung unterzogen werden, sofern die Erkennungsgenauigkeit einen vorgegebenen Schwellwert unterschreitet. Für die Ermittlung der Erkennungsgenauigkeit kann auf Verfahren zurückgegriffen werden, die aus dem Stand der Technik bekannt sind. Dabei kann die ermittelte Erkennungsgenauigkeit der Klassifizierung (im Englischen auch als Classification Accuracy oder Classification Score bezeichnet) als Grundlage für eine Entscheidung verwendet werden, ob das Klassifizierungsergebnis als zuverlässig angesehen werden kann. Wird das Klassifizierungsergebnis als unzuverlässig angesehen, so können die Test-Bilddaten einer manuellen Klassifizierung unterzogen und anschließend das Ergebnis der manuellen Klassifizierung als zusätzliche Trainingsdaten zum Trainieren des Klassifikators verwendet werden. Dabei kann beispielsweise vorgesehen sein, dass ein Klassifizierungsergebnis als zuverlässig angesehen wird, wenn die ermittelte Erkennungsgenauigkeit mindestens 50 %, mindestens 70 % oder mindestens 90 % beträgt. Anders ausgedrückt kann der Schwellwert auf einen Wert von 0,5, 0,7 oder 0,9 festgelegt werden.

Zudem kann bei dem erfindungsgemäßen Verfahren vorgesehen sein, dass die Test-Bilddaten stichprobenartig manuell klassifiziert werden und dass eine Warnmeldung ausgegeben wird, falls das Ergebnis der manuellen Klassifizierung von dem Ergebnis der Klassifizierung unter Verwendung des mit Trainingsdaten trainierten Klassifikators abweicht. Durch die stichprobenartige manuelle Klassifizierung kann die Zuverlässigkeit des erfindungsgemäßen Verfahrens überwacht werden. Dabei wird davon ausgegangen, dass die manuelle Klassifizierung der Bilddaten als zuverlässig anzusehen ist. Die bei der stichprobenartigen manuellen Klassifizierung gewonnenen Klassifizierungsergebnisse können mit den automatisiert ermittelten Klassifizierungsergebnissen verglichen werden. Sofern die manuellen Klassifizierungsergebnisse und die automatisierten Klassifizierungsergebnisse identisch sind, kann von einer hohen Zuverlässigkeit des Verfahrens ausgegangen werden. Werden signifikante Unterschiede zwischen den manuellen Klassifizierungsergebnissen und den automatisierten Klassifizierungsergebnissen festgestellt, so kann daraus auf eine geringe Zuverlässigkeit des Verfahrens geschlossen werden. In diesem Fall kann beispielsweise ein erneutes Trainieren des Klassifikators mit zusätzlichen Trainingsdaten erfolgen. Beispielsweise kann vorgesehen sein, dass die Frequenz bzw. Häufigkeit der stichprobenartigen manuellen Klassifizierung von der Übereinstimmung der manuellen Klassifizierungsergebnisse und der automatisierten Klassifizierungsergebnisse abhängt. Wird bei der manuellen Klassifizierung ermittelt, dass die manuellen Klassifizierungsergebnisse und die automatisierten Klassifizierungsergebnisse identisch sind, kann das Intervall zwischen den stichprobenartigen manuellen Klassifizierungen verlängert werden, während dieses Intervall verkürzt wird, wenn bei der zuletzt durchgeführten manuellen Klassifizierung auf eine geringe Zuverlässigkeit des Verfahrens geschlossen wurde.

Des Weiteren wird zur Lösung der vorstehend beschriebenen Aufgabe eine Vorrichtung zur automatisierten Erkennung von Verkehrsteilnehmertypen im Straßenverkehr vorgeschlagen, wobei die Vorrichtung Folgendes aufweist:
- eine Kameravorrichtung umfassend einen Bildsensor und eine Aufnahmeoptik, wobei die Kameravorrichtung dazu ausgelegt ist, Test-Bilddaten aufzunehmen, die eine fotografische Abbildung einer Verkehrssituation speichern ;
- eine Speichereinheit zum Speichern der Test-Bilddaten und von Test-Metadaten;
- eine Recheneinheit, die dazu ausgelegt ist, die Test-Bilddaten hinsichtlich des Verkehrsteilnehmertyps unter Verwendung eines mit Trainingsdaten trainierten Klassifikators zu klassifizieren, wobei die Trainingsdaten Trainings-Bilddaten sowie den Trainings-Bilddaten zugeordnete Trainings-Metadaten aufweisen und der Klassifikator die Klassifizierung der Test-Bilddaten in Abhängigkeit von den Trainings-Metadaten trainiert ist.

Die Kameravorrichtung kann insbesondere einen Bildsensor und eine Aufnahmeoptik aufweisen. Die Vorrichtung kann in Form einer integralen Kameravorrichtung ausgebildet sein. Alternativ können jedoch auch die Kameravorrichtung und die weiteren Komponenten als verteilte Komponenten ausgebildet sein. Insbesondere kann die Speichereinheit in Form eines Cloud-Speichers ausgeführt sein. Zudem kann es vorgesehen sein, dass die Recheneinheit vollständig oder teilweise in Form einer cloudbasierten Recheneinheit ausgebildet ist.

Gemäß einer Ausführungsform der erfindungsgemäßen Vorrichtung kann vorgesehen sein, dass die Test-Metadaten und die Trainings-Metadaten Ortungsdaten, Perspektivdaten und/oder Situationsdaten aufweisen.

Auch kann vorgesehen sein, dass die Vorrichtung einen Ortungssensor aufweist, wobei der Ortungssensor bevorzugt als GPS-Sensor ausgelegt ist. Andere satellitengestützte Ortungssensoren können ebenfalls eingesetzt werden. Alternativ hierzu kann vorgesehen sein, dass der Ortungssensor als GSM-Ortungssensor ausgebildet ist.

Gemäß einer Ausführungsform der erfindungsgemäßen Vorrichtung kann vorgesehen sein, dass die Test-Metadaten und die Trainings-Metadaten Ortungsdaten aufweisen und dass der Klassifikator ausschließlich mit Trainingsdaten trainiert ist, die Trainings-Metadaten aufweisen, welche identisch mit den Test-Metadaten sind oder den Test-Metadaten zugeordnet sind.

Ferner kann vorgesehen sein, dass die Test-Metadaten und die Trainings-Metadaten Perspektivdaten aufweisen und dass der Klassifikator ausschließlich mit Trainingsdaten trainiert ist, die Trainings-Metadaten aufweisen, welche identisch mit den Test-Metadaten sind oder den Test-Metadaten zugeordnet sind.

Darüber hinaus kann in einer bevorzugten Ausführungsform der erfindungsgemäßen Vorrichtung vorgesehen sein, dass die Test-Metadaten und die Trainings-Metadaten Situationsdaten aufweisen und dass der Klassifikator ausschließlich mit Trainingsdaten trainiert ist, die Trainings-Metadaten aufweisen, welche identisch mit den Test-Metadaten sind oder den Test-Metadaten zugeordnet sind.

Gemäß einer weiteren Ausführungsform der erfindungsgemäßen Vorrichtung kann vorgesehen sein, dass die Recheneinheit dazu ausgelegt ist, bei der Klassifizierung der Test-Bilddaten die Erkennungsgenauigkeit der Klassifizierung zu ermitteln und die Test-Bilddaten an eine externe Klassifizierungseinheit zu übermitteln, sofern die Erkennungsgenauigkeit einen vorgegebenen Schwellwert unterschreitet. Die externe Klassifizierungseinheit kann insbesondere eine manuelle Klassifizierungsstation aufweisen. Das Ergebnis der manuellen Klassifizierung kann zum Trainieren des Klassifikators verwendet werden. Die Ergebnisse der manuellen Klassifizierung können dabei als Trainingsdaten in der Speichereinheit hinterlegt werden.

Auch kann vorgesehen sein, dass die externe Klassifizierungseinheit ebenfalls auf einer automatisierten Klassifizierung beruht. Dadurch kann ein externes auf künstlicher Intelligenz (KI) basiertes System verwendet werden, um die Ergebnisse des internen KI-basierten Systems zu überprüfen. Anders ausgedrückt wird ein erster Klassifikator und ein zweiter Klassifikator eingesetzt, während der zweite Klassifikator die Ergebnisse des ersten Klassifikators überprüft. Werden dabei Diskrepanzen festgestellt, kann daraus geschlossen werden, dass die Klassifizierungsergebnisse nicht zuverlässig sind. Beispielsweise kann in Reaktion einer ermittelten Zuverlässigkeit, die geringer als ein vorgegebener Schwellwert ist, ein zusätzliches Trainieren des ersten Klassifikators erfolgen. Insbesondere können bei dem ersten Klassifikator und dem zweiten Klassifikator verschiedene Trainingsdaten oder verschiedene Klassifikatoren zum Einsatz kommen.

Schließlich kann bei der erfindungsgemäßen Vorrichtung vorgesehen sein, dass die Recheneinheit dazu ausgelegt ist, stichprobenartig Test-Bilddaten an eine externe Klassifizierungseinheit zu übermitteln, in der eine separate Klassifizierung der Test-Bilddaten erfolgt, wobei die Vorrichtung einen zusätzlichen Warnsignalgenerator aufweist, der dazu ausgelegt ist, eine Warnmeldung auszugeben, sofern das Ergebnis der separaten Klassifizierung von dem Ergebnis der Klassifizierung unter Verwendung des mit Trainingsdaten trainierten Klassifikators abweicht. Der Warnsignalgenerator kann dabei insbesondere als akustischer oder optischer Warnsignalgenerator ausgebildet sein. Die externe Klassifizierungseinheit kann dabei als manuelle oder automatisierte Klassifizierungseinheit ausgebildet sein.

Nachfolgend wird die vorliegende Erfindung anhand der Figuren näher erläutert. Dabei zeigen die Figuren Folgendes:
- Fig. 1: ein Ausführungsbeispiel des erfindungsgemäßen Verfahrens,
- Fig. 2: einen Trainingsdatensatz für das Trainieren des Klassifikators, wobei der Trainingsdatensatz Metadaten aufweist,
- Fig. 3: ein Ablaufdiagramm für den dritten Verfahrensschritt eines Ausführungsbeispiels des erfindungsgemäßen Verfahrens, und
- Fig. 4: ein Ausführungsbeispiel der erfindungsgemäßen Vorrichtung.

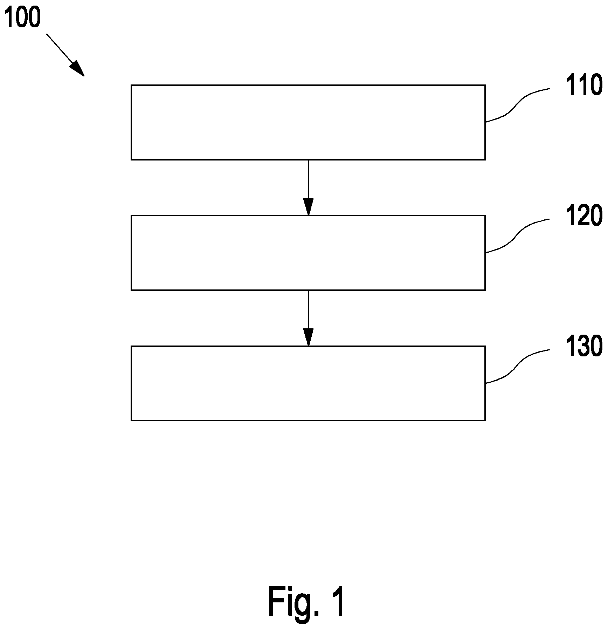

In der Fig. 1 ist ein erstes Ausführungsbeispiel des erfindungsgemäßen Verfahrens 100 dargestellt. In einem ersten Verfahrensschritt 110 werden auszuwertende Test-Bilddaten unter Verwendung einer Kameravorrichtung erzeugt. In den Test-Bilddaten ist eine fotografische Abbildung codiert, die im Straßenverkehr aufgenommen wurde. Beispielsweise können die Test-Bilddaten eine fotografische Abbildung einer Straßenkreuzung speichern. In einem zweiten Verfahrensschritt 120 werden Test-Metadaten erzeugt, wobei die Test-Metadaten den auszuwertenden Test-Bilddaten zugeordnet sind. Die Test-Metadaten können insbesondere Ortungsdaten, Perspektivdaten oder Situationsdaten aufweisen.

Die Test-Metadaten und die Test-Bilddaten bilden gemeinsam die auszuwertenden Testdaten, welche eine aktuelle Verkehrssituation an einem bestimmten Ort und aus einer bestimmten Perspektive abbilden. Anschließend werden in einem dritten Verfahrensschritt 130 die Test-Bilddaten hinsichtlich des Verkehrsteilnehmertyps und unter Verwendung eines zuvor mit Trainingsdaten trainierten Klassifikators klassifiziert. Die Trainingsdaten weisen dabei Trainings-Bilddaten sowie den Trainings-Bilddaten zugeordnete Trainings-Metadaten auf. Die Trainings-Metadaten geben beispielsweise an, an welchem Ort, aus welcher Perspektive oder in welchem Szenario ein Bild des Trainingsdatensatzes aufgenommen wurde. In Abhängigkeit von den aktuellen Test-Metadaten wird ein Klassifikator eingesetzt, der selektiv mit Trainingsdaten trainiert wurde, welche den aktuellen Testdaten entsprechen. Beispielsweise können die Test-Metadaten Ortungsdaten enthalten, welche angeben, dass die aktuellen Test-Bilddaten in den USA aufgenommen wurden. In diesem Fall wird ein Klassifikator zum Klassifizieren der Test-Bilddaten verwendet, der selektiv mit Trainingsdaten trainiert wurde, die in den USA aufgenommen wurden. Dabei kann der Klassifikator ausschließlich oder überwiegend mit Trainingsdaten trainiert worden sein, die in den USA aufgenommen wurden. Beispielsweise kann vorgesehen sein, dass unterschiedlich trainierte Klassifikatoren bereitgestellt werden und das entsprechend den aktuellen Test-Metadaten ein geeigneter Klassifikator ausgewählt wird. Alternativ kann vorgesehen sein, dass in einer Speichereinheit Trainingsdaten hinterlegt sind und dass der Klassifikator entsprechend den aktuellen Test-Metadaten mit geeigneten Trainingsdaten trainiert wird.

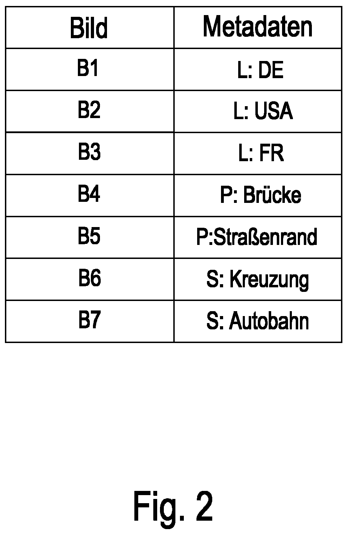

In der Fig. 2 ist beispielhaft ein Trainingsdatensatz zum Trainieren eines Klassifikators dargestellt. In dem dargestellten Beispiel enthält der Trainingsdatensatz Bilddaten sieben verschiedene Bilder, wobei die Bilder B1 bis B3 Ortungsdaten, die Bilder B4 und B5 Perspektivdaten und die Bilder B6 und B7 Situationsdaten aufweisen. Die Ortungsdaten, die den Bildern B1 bis B3 zugeordnet sind, enthalten in dem abgebildeten Beispiel Länderdaten, die angeben, dass Bild B1 in Deutschland, Bild B2 in den USA und Bild B3 in Frankreich aufgenommen wurde. Die Perspektivdaten, die den Bildern B4 und B5 zugeordnet sind, enthalten Indikatoren, welche anzeigen, dass Bild B4 aus der Perspektive einer Autobahnbrücke und Bild B5 aus einer Straßenrandperspektive aufgenommen wurde. Schließlich geben die den Bildern B6 und B7 zugeordneten Metadaten (in diesem Beispiel: Situationsdaten) an, dass Bild B6 an einer Straßenkreuzung und Bild B7 auf einer Autobahn aufgenommen wurde. In der Praxis kann der Trainingsdatensatz mehrere Tausend oder gar mehrere Millionen Bilder sowie den Bildern zugeordnete Metadatensätze aufweisen. Auch wenn in diesem Ausführungsbeispiel jedem Bild lediglich eine Art an Metadaten (Ortungsdaten, Perspektivdaten oder Situationsdaten) zugeordnet ist, kann es gemäß der vorliegenden Erfindung ebenso vorgesehen sein, dass jedem Bild mehrere Metadatensätze zugeordnet ist. Anders ausgedrückt können dem Bild B1 gleichzeitig Ortungsdaten, Perspektivdaten und Situationsdaten zugeordnet sein. In Abhängigkeit von den aktuellen Test-Metadaten kann anschließend ein geeignet trainierter Klassifikator ausgewählt sein, der auf Grundlage von Trainingsdaten trainiert wurde, die zuvor unter ähnlichen oder identischen Bedingungen aufgenommen wurden, wie die Testdaten. Auf diese Weise kann durch das selektive Trainieren des Klassifikators die Genauigkeit und Zuverlässigkeit der Klassifizierung erhöht werden.

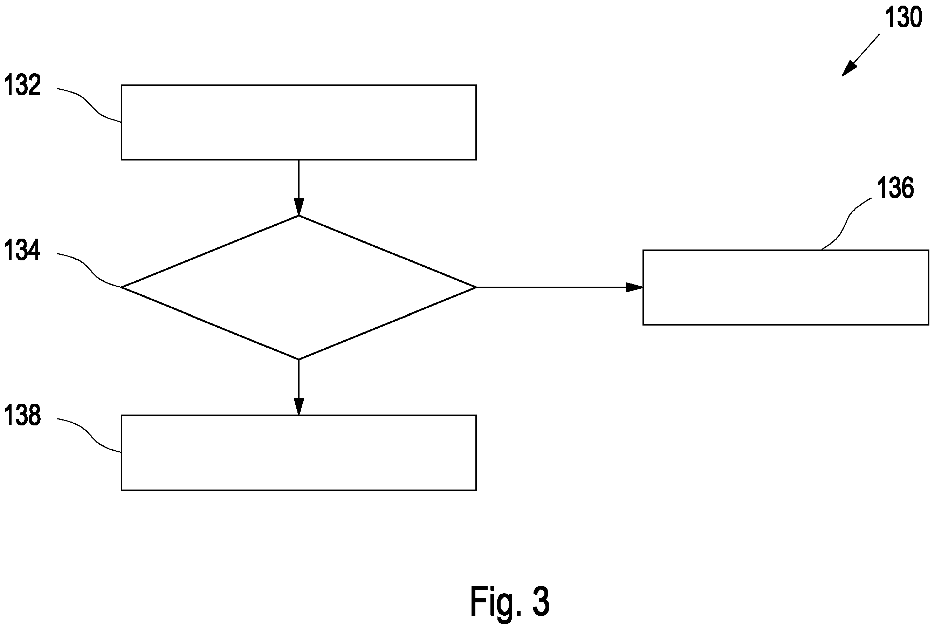

In der Fig. 3 ist ein Ablaufdiagramm für den dritten Verfahrensschritt 130 eines Ausführungsbeispiels des erfindungsgemäßen Verfahrens dargestellt. Der dritte Verfahrensschritt 130 weist gemäß dem dargestellten Ausführungsbeispiel einen ersten Teilschritt 132 einen zweiten Teilschritt 134 einen dritten Teilschritt 136 und einen vierten Teilschritt 138 auf. In dem ersten Teilschritt 132 wird geprüft, ob die Testdaten Metadaten aufweisen. Falls Metadaten in den Testdaten enthalten sind, wird in dem zweiten Teilschritt 134 geprüft, ob die Test-Metadaten Ortungsdaten enthalten. Die Ortungsdaten können in unterschiedlichen Formaten gespeichert sein. Beispielsweise können die Ortungsdaten GPS-Koordinaten enthalten, die den Ort bzw. das Land beschreiben, in denen das aktuelle Bild aufgenommen wurde. Alternativ können die GPS-Koordinaten bereits ausgewertet sein, sodass die Ortungsdaten anstatt der Rohdaten direkt einen Ländercode aufweisen können. Dadurch kann in einfacher Weise auf das Land oder die Region geschlossen werden, in denen die Test-Bilddaten aufgenommen wurden. Wurde beispielsweise festgestellt, dass die Test-Metadaten Ortungsdaten aufweisen, die angeben, dass die auszuwertenden Test-Bilddaten in den USA aufgenommen wurden, so kann in dem dritten Teilschritt 136 ein Klassifikator ausgewählt werden, der zuvor selektiv mit Trainingsdaten trainiert wurde, die ebenfalls in den USA aufgenommen wurden. Konnten keine Ortungsdaten ermittelt werden, so kann in einem vierten Teilschritt 138, der alternativ zum dritten Teilschritt 136 ausgeführt wird, ein Klassifikator ausgewählt werden, der nicht selektiv mit Trainingsdaten trainiert wurde, sondern mit einem Klassifikator, der mit allgemeinen Trainingsdaten (beispielsweise Trainingsdaten, die in verschiedenen Regionen aufgenommen wurden) trainiert wurde. Analog zu dem in der Fig. 3 gezeigten Ausführungsbeispiel kann es vorgesehen sein, dass in dem zweiten Teilschritt 134 geprüft wird, ob die Test-Metadaten Perspektivdaten oder Situationsdaten enthalten. Entsprechend kann in dem dritten Teilschritt 136 ein Klassifikator für die Klassifizierung verwendet werden, der selektiv mit Trainingsdaten trainiert wurde, die zuvor aus der gleichen Perspektive oder in der gleichen Situation aufgenommen wurden.

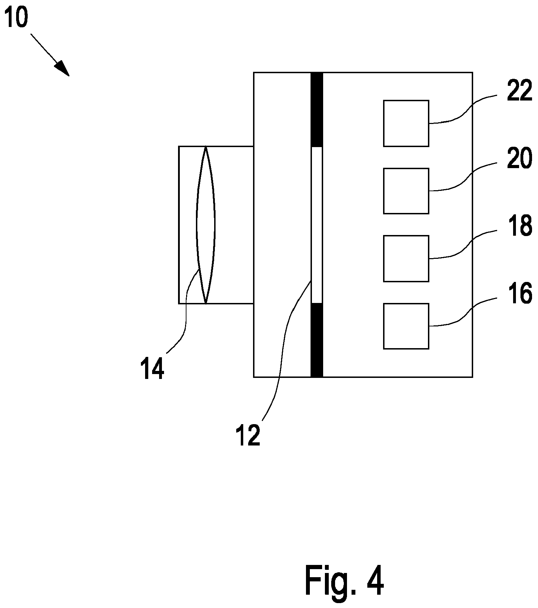

Schließlich ist in der Fig. 4 ein Ausführungsbeispiel der erfindungsgemäßen Vorrichtung 10 abgebildet. Die Vorrichtung 10 weist einen Bildsensor 12 und eine vor dem Bildsensor 12 angeordnete Aufnahmeoptik 14 auf. Zudem umfasst die Vorrichtung 10 eine Speichereinheit 16, die in dem abgebildeten Ausführungsbeispiel innerhalb der Vorrichtung 10 angeordnet ist. Alternativ hierzu kann es auch vorgesehen sein, dass die Speichereinheit 16 keinen integralen Bestandteil der Vorrichtung 10 bildet, sondern als eine externe Speichereinheit 16 ausgeführt ist. In der Speichereinheit 16 können beispielsweise mehrere Klassifikatoren bzw. mehrere Algorithmen für die Klassifizierung der Test-Bilddaten gespeichert sein. Alternativ kann es vorgesehen sein, dass lediglich ein einziger Klassifikator bzw. lediglich ein Algorithmus für die Klassifizierung der Test-Bilddaten in der Speichereinheit 16 hinterlegt ist und zudem Trainingsdaten, sodass der Klassifikator in Abhängigkeit von den Test-Metadaten selektiv mit den Trainingsdaten trainiert werden kann. Zudem weist die Vorrichtung 10 eine Recheneinheit 18 auf, die dazu ausgelegt ist, die Test-Bilddaten hinsichtlich des Verkehrsteilnehmertyps und unter Verwendung des mit Trainingsdaten trainierten Klassifikators zu klassifizieren. Des Weiteren weist die Vorrichtung 10 einen Ortungssensor 20 auf, der insbesondere als GPS-Sensor ausgeführt sein kann. Schließlich weist die in der Fig. 4 abgebildete Vorrichtung ein Kommunikationsmodul 22 auf, das dazu ausgelegt ist, mit weiteren Vorrichtungen in einem Netzwerk zu kommunizieren. Das Kombinationsmodul 22 kann insbesondere als ein WLAN- oder Bluetooth-Modul ausgelegt sein und dazu ausgebildet sein, mit einer zentralen Servereinheit zu kommunizieren.

### BEZUGSZEICHENLISTE

- 10: Vorrichtung
- 12: Bildsensor
- 14: Aufnahmeoptik
- 16: Speichereinheit
- 18: Recheneinheit
- 20: Ortungssensor
- 22: Kommunikationsmodul
- 100: erfindungsgemäßes Verfahren
- 110: erster Verfahrensschritt
- 120: zweiter Verfahrensschritt
- 130: dritter Verfahrensschritt
- 132: erster Teilschritt
- 134: zweiter Teilschritt
- 136: dritter Teilschritt
- 138: vierter Teilschritt

## Patentansprüche

1. Verfahren (100) zur automatisierten Klassifizierung von Verkehrsteilnehmertypen im Straßenverkehr, wobei das Verfahren die folgenden Schritte aufweist:
- Generierung von auszuwertenden Test-Bilddaten unter Verwendung einer Kameravorrichtung, wobei die Test-Bilddaten eine fotografische Abbildung einer Verkehrssituation speichern (110);
- Generierung von Test-Metadaten, wobei die Test-Metadaten den auszuwertenden Test-Bilddaten zugeordnet sind (120);
- Klassifizierung der Test-Bilddaten hinsichtlich des Verkehrsteilnehmertyps unter Verwendung eines mit Trainingsdaten trainierten Klassifikators, wobei die Trainingsdaten Trainings-Bilddaten sowie den Trainings-Bilddaten zugeordnete Trainings-Metadaten aufweisen und der Klassifikator als ein in Abhängigkeit von den Test-Metadaten trainierter Klassifikator ausgebildet ist (130).

2. Verfahren (100) nach Anspruch 2, **dadurch gekennzeichnet, dass** die Test-Metadaten und die Trainings-Metadaten Ortungsdaten, Perspektivdaten und/oder Situationsdaten aufweisen.

3. Verfahren (100) nach Anspruch 1 oder 2, **dadurch gekennzeichnet, dass** die Test-Metadaten und die Trainings-Metadaten Ortungsdaten aufweisen und dass der Klassifikator ausschließlich mit Trainingsdaten trainiert ist, die Trainings-Metadaten aufweisen, welche identisch mit den Test-Metadaten sind oder den Test-Metadaten zugeordnet sind.

4. Verfahren (100) nach einem der Ansprüche 1 bis 3, **dadurch gekennzeichnet, dass** die Test-Metadaten und die Trainings-Metadaten Perspektivdaten aufweisen und dass der Klassifikator ausschließlich mit Trainingsdaten trainiert ist, die Trainings-Metadaten aufweisen, welche identisch mit den Test-Metadaten sind oder den Test-Metadaten zugeordnet sind.

5. Verfahren (100) nach einem der Ansprüche 1 bis 4, **dadurch gekennzeichnet, dass** die Test-Metadaten und die Trainings-Metadaten Situationsdaten aufweisen und dass der Klassifikator ausschließlich mit Trainingsdaten trainiert ist, die Trainings-Metadaten aufweisen, welche identisch mit den Test-Metadaten sind oder den Test-Metadaten zugeordnet sind.

6. Verfahren (100) nach einem der Ansprüche 1 bis 5, **dadurch gekennzeichnet, dass** bei der Klassifizierung der Test-Bilddaten die Erkennungsgenauigkeit der Klassifizierung ermittelt wird und dass die Test-Bilddaten einer manuellen Klassifizierung unterzogen werden, sofern die Erkennungsgenauigkeit einen vorgegebenen Schwellwert unterschreitet.

7. Verfahren (100) nach einem der Ansprüche 1 bis 6, **dadurch gekennzeichnet, dass** die Test-Bilddaten stichprobenartig manuell klassifiziert werden und dass eine Warnmeldung ausgegeben wird, falls das Ergebnis der manuellen Klassifizierung von dem Ergebnis der Klassifizierung unter Verwendung des mit Trainingsdaten trainierten Klassifikators abweicht.

8. Vorrichtung (10) zur automatisierten Erkennung von Verkehrsteilnehmertypen im Straßenverkehr, wobei die Vorrichtung Folgendes aufweist:
- eine Kameravorrichtung (10) umfassend einen Bildsensor (12) und eine Aufnahmeoptik (14), wobei die Kameravorrichtung (10) dazu ausgelegt ist, Test-Bilddaten aufzunehmen, die eine fotografische Abbildung einer Verkehrssituation speichern;
- eine Speichereinheit (16) zum Speichern der Test-Bilddaten und von Test-Metadaten;
- eine Recheneinheit (18), die dazu ausgelegt ist, die Test-Bilddaten hinsichtlich des Verkehrsteilnehmertyps unter Verwendung eines mit Trainingsdaten trainierten Klassifikators zu klassifizieren, wobei die Trainingsdaten Trainings-Bilddaten sowie den Trainings-Bilddaten zugeordnete Trainings-Metadaten aufweisen und der Klassifikator die Klassifizierung der Test-Bilddaten in Abhängigkeit von den Trainings-Metadaten trainiert ist.

9. Vorrichtung (10) nach Anspruch 8, **dadurch gekennzeichnet, dass** die Test-Metadaten und die Trainings-Metadaten Ortungsdaten, Perspektivdaten und/oder Situationsdaten aufweisen.

10. Vorrichtung (10) nach einem der Ansprüche 8 oder 9, **dadurch gekennzeichnet, dass** die Vorrichtung (10) einen Ortungssensor (20) aufweist, wobei der Ortungssensor (20) bevorzugt als GPS-Sensor ausgelegt ist.

11. Vorrichtung (10) nach einem der Ansprüche 8 bis 10, **dadurch gekennzeichnet, dass** die Test-Metadaten und die Trainings-Metadaten Ortungsdaten aufweisen und dass der Klassifikator ausschließlich mit Trainingsdaten trainiert ist, die Trainings-Metadaten aufweisen, welche identisch mit den Test-Metadaten sind oder den Test-Metadaten zugeordnet sind.

12. Vorrichtung (10) nach einem der Ansprüche 8 bis 11, **dadurch gekennzeichnet**, die Test-Metadaten und die Trainings-Metadaten Perspektivdaten aufweisen und dass der Klassifikator ausschließlich mit Trainingsdaten trainiert ist, die Trainings-Metadaten aufweisen, welche identisch mit den Test-Metadaten sind oder den Test-Metadaten zugeordnet sind.

13. Vorrichtung (10) nach einem der Ansprüche 8 bis 12, **dadurch gekennzeichnet, dass** die Test-Metadaten und die Trainings-Metadaten Situationsdaten aufweisen und dass der Klassifikator ausschließlich mit Trainingsdaten trainiert ist, die Trainings-Metadaten aufweisen, welche identisch mit den Test-Metadaten sind oder den Test-Metadaten zugeordnet sind.

14. Vorrichtung (10) nach einem der Ansprüche 8 bis 13, **dadurch gekennzeichnet, dass** die Recheneinheit (18) dazu ausgelegt ist, bei der Klassifizierung der Test-Bilddaten die Erkennungsgenauigkeit der Klassifizierung zu ermitteln und die Test-Bilddaten an eine externe Klassifizierungseinheit zu übermitteln, sofern die Erkennungsgenauigkeit einen vorgegebenen Schwellwert unterschreitet.

15. Vorrichtung (10) nach einem der Ansprüche 8 bis 14, **dadurch gekennzeichnet, dass** die Recheneinheit (18) dazu ausgelegt ist, stichprobenartig die Test-Bilddaten an eine externe Klassifizierungseinheit zu übermitteln, in der eine separate Klassifizierung der Test-Bilddaten erfolgt, wobei die Vorrichtung (10) einen zusätzlichen Warnsignalgenerator aufweist, der dazu ausgelegt ist, eine Warnmeldung auszugeben, sofern das Ergebnis der separaten Klassifizierung von dem Ergebnis der Klassifizierung unter Verwendung des mit Trainingsdaten trainierten Klassifikators abweicht.
